# EUROPEAN PATENT APPLICATION

(11) **EP 2 124 279 A1**
(43) Date of publication of application: **25.11.2009**
(21) Application number: 07832638.6
(22) Date of filing: 28.11.2007
(51) Int. Cl.: H01M 8/04, H01M 8/10

(54) **FUEL CELL SYSTEM**

(30) Priority: 01.12.2006 JP 2006326145
(71) Applicant: Toyota Jidosha Kabushiki Kaisha, Toyota-shi Aichi 471-8571 (JP)
(72) Inventor: USAMI, Sho, Toyota-shi Aichi 471-8571 (JP)
(74) Representative: Albutt, Anthony John
(86) International application number: PCT/JP2007/072916
(87) International publication number: WO 2008/069065

(57) **Abstract**

Disclosed is a fuel cell system, which uses a dead end method and discharges impurities accumulated on the anode side while inhibiting the oxidation reaction of carbon.

In the fuel cell system 1, a fuel cell 2 operates while a passage 8 for a fuel off gas is closed. Impurities accumulated in the passage 8 are discharged when a purge valve 9 opens. When a cell voltage measured by voltage measurement means 11 is not lower than a predetermined value, the present invention activates purge limitation means 13 to avoid a purge. When a cathode potential at which carbon oxidation occurs is X and the maximum anode potential is Y, the predetermined value is equal to X - Y.

## Description

### Technical Field

The present invention relates to a fuel cell system, and more particularly to a fuel cell system that operates a fuel cell with a fuel off gas passage closed.

### Background Art

A fuel cell has a fuel cell stack, which is formed by stacking a plurality of cells. A cell is formed by stacking, for instance, a membrane-electrode assembly (MEA) and a separator. The membrane-electrode assembly includes an electrolyte membrane, which is made of an ion exchange resin; an anode, which is placed on one surface of the electrolyte membrane; and a cathode, which is placed on the other surface of the electrolyte membrane. The anode and cathode each include a catalytic layer, which is positioned in contact with the electrolyte membrane. When a reaction gas is supplied to each electrode, an electrochemical reaction occurs between the electrodes to generate electromotive force. More specifically, this reaction occurs when hydrogen (fuel gas) is supplied to the anode and oxygen (oxidant gas) is supplied to the cathode.

In general, air taken in from the outside air by a compressor is supplied to the cathode. On the other hand, hydrogen stored in a high-pressure hydrogen tank is supplied to the anode. A so-called dead end method (refer, for instance, to Patent Document 1) is used as a method of supplying hydrogen to the anode. When this method is employed, an operation is conducted with a hydrogen passage closed while hydrogen is supplied to the anode in an amount equal to the amount of consumed hydrogen.

When the employed fuel cell system is based on the dead end method, the amount of impurities accumulated in a fuel gas passage increases with time. For example, nitrogen contained in the air supplied to the cathode passes through the electrolyte membrane and accumulates on the anode side. Therefore, the fuel cell system disclosed in Patent Document 1 includes a purge valve for periodically discharging the impurities from the fuel gas passage. Further, when the voltage of the fuel cell is lower than a predetermined value, it can be recovered by opening the purge valve.

Patent Document 1:
   Japanese Patent Laid-Open(PCT) No. 2004-536436

### Disclosure of Invention

### Problem to be Solved by the Invention

However, if the purge valve in the fuel cell system in which carbon is used for the side toward the cathode is opened when the potential of the cathode is not lower than a predetermined value, the carbon oxidizes to deteriorate the fuel cell.

The present invention has been made in view of the above circumstances. It is an object of the present invention to discharge impurities accumulated on the anode side while inhibiting the oxidation reaction of carbon in a fuel cell system based on the dead end method.

The other objects and advantages of the present invention will be apparent from the following description.

### Advantageous Effect of the Invention

### Means for Solving the Problem

The present invention is a fuel cell system that has a fuel cell containing an anode and a cathode, which are positioned on either side of an electrolyte membrane, supplies a fuel gas to the anode, supplies an oxidant gas to the cathode, and operates while a passage for a fuel off gas discharged from the fuel cell is closed, carbon being used for a side toward the cathode, the fuel cell system comprising:
voltage measurement means for measuring a voltage of the fuel cell;
purge means for performing a purge by opening the passage for the fuel off gas; and
purge limitation means for limiting an operation of the purge means when the voltage measured by the voltage measurement means is not lower than a predetermined value.

When a potential of the cathode at which the carbon oxidizes is X and a maximum value of a potential of the anode is Y, the predetermined value is equal to X - Y.

It is preferred that the value X is between 1.1 V and 1.3 V; and the value Y is between 0.45 V and 0.55 V.

It is preferred that the value X is 1.2 V.

It is preferred that the predetermined value is 0.7 V.

The present invention is the fuel cell system further comprising:
voltage decrease means for decreasing the voltage of the fuel cell when the voltage measured by the voltage measurement means is not lower than the predetermined value.

The voltage decrease means sets a current in the fuel cell to a maximum value of a permissible current in the fuel cell.

The voltage decrease means sets a pressure of the fuel gas to a minimum pressure required for the purge.

### Effects of the Invention

According to the present invention, the fuel cell system includes the purge limitation means, which limits the operation of the purge means when the voltage measured by the voltage measurement means is not lower than a predetermined value. This makes it possible to discharge impurities accumulated on the anode side while inhibiting the oxidation reaction of carbon on the cathode side.

### Brief Description of Drawings

Fig. 1 is a diagram illustrating a typical configuration of a fuel cell system according to an embodiment of the present invention.
Fig. 2 is a schematic cross-sectional view illustrating a typical cell that is included in the fuel cell.
Fig. 3 is a view showing the change with time of the electrode potentials of the anode or cathode and the cell voltage of the fuel cell change with time.
Fig. 4 is a view showing the relationship between the potential of the cathode and the amount of carbon oxidation.
Fig. 5 is a view showing the relationship between current and voltage of the fuel cell.
Fig. 6 is a diagram illustrating a typical configuration of a fuel cell system according to an embodiment of the present invention.
Fig. 7 is a diagram illustrating a typical configuration of a fuel cell system according to an embodiment of the present invention.

### Description of Reference characters

- 1: fuel cell system
- 2: fuel cell
- 3: motor
- 4: compressor
- 5: humidifier
- 6: hydrogen tank
- 7: hydrogen pressure regulating valve
- 8: passage
- 9: purge valve
- 10: air cleaner
- 11: voltage measurement means
- 12: control device
- 13: purge limitation means
- 16: purge means
- 17: voltage decrease means
- 21: cell
- 22: MEGA
- 23,24: separator
- 25: electrolyte membrane
- 26: anode
- 27: cathode
- 28,29: gas diffusion layer

### Best Mode for Carrying Out the Invention

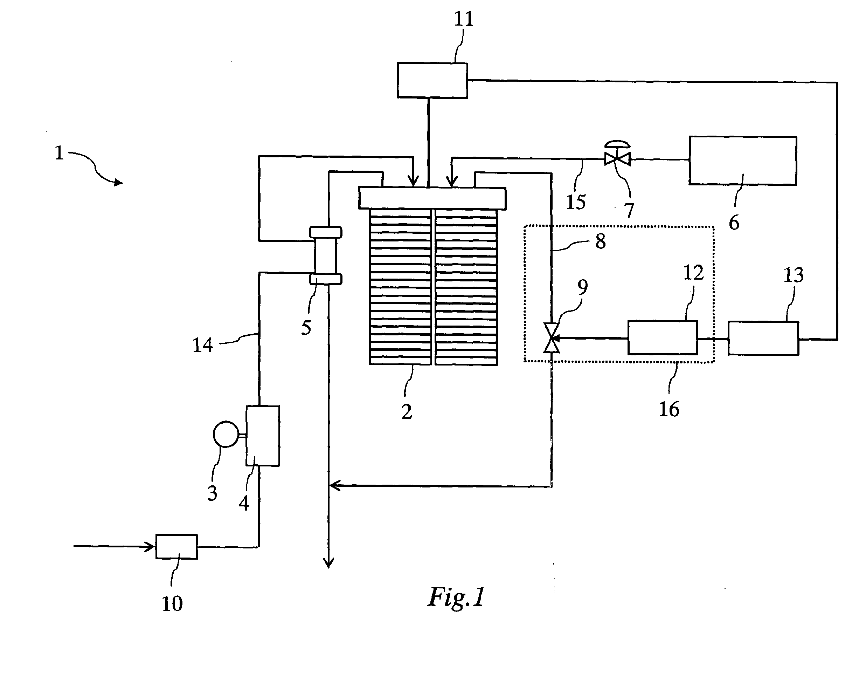

Fig. 1 is a diagram illustrating a typical configuration of a fuel cell system according to an embodiment of the present invention. This fuel cell system can be not only used as a vehicle-mounted or stationary fuel cell system but also used in various other applications. Arrows in Fig. 1 indicate the direction of gas flow.

As shown in Fig. 1, the fuel cell system 1 includes a fuel cell 2. A cathode of the fuel cell 2 is connected to an oxidant gas (air) passage 14. An air cleaner 10 is installed at the upstream end of the oxidant gas passage 14 to remove dirt and other foreign matter from the air. A compressor 4 is installed downstream of the air cleaner 10. Driven by a motor 3, the compressor 4 supplies compressed air to the fuel cell 2. A humidifier 5 is installed downstream of the compressor 4 to extract water from an oxidant off gas, which is discharged from the fuel cell 2, and humidifies the air to be supplied to the fuel cell 2.

An anode of the fuel cell 2 is connected to a fuel gas (hydrogen) passage 15. A hydrogen tank 6 is connected to the upstream end of the fuel gas passage 15 to store dry hydrogen in a compressed state. A hydrogen pressure regulating valve 7 is installed downstream of the hydrogen tank 6 to adjust the pressure of the hydrogen to be supplied from the hydrogen tank 6 to the fuel cell 2. The anode of the fuel cell 2 is also connected to a passage 8 for a fuel off gas, which is discharged from the fuel cell 2. A purge valve 9 is installed in the passage 8 for the fuel off gas. Opening the purge valve 9 purges the fuel off gas in accordance with the valve opening.

In the fuel cell system 1, the dead end method is used to supply hydrogen to the anode. A dead end operation of the fuel cell provides power generation in at least one of the following modes:
(1) A fuel cell that provides continuous power generation without discharging air from the anode.
(2) A fuel cell that provides continuous power generation while the partial pressure of impurities (nitrogen, etc.) in the anode, which is passed from the cathode through the electrolyte membrane, is substantially balanced with the partial pressure of cathode impurities. In other words, a fuel cell that provides power generation in a state where the partial pressure of anode impurities is raised to the partial pressure of cathode impurities.
(3) A fuel cell that substantially consumes the whole fuel gas supplied to the anode in a power generation reaction. It is preferred that the whole supplied fuel except a portion having leaked through a seal or film to sections other than the anode be consumed.

In the fuel cell system 1 according to the present embodiment, the dead end operation can be conducted by supplying hydrogen from the hydrogen tank 6 while the purge valve 9 is closed to block the passage 8 for the fuel off gas. The fuel cell system 1 according to the present invention can be used not only for a fuel cell that conducts a dead end operation in the entire power generation zone, but also for a fuel cell that conducts a dead end operation in at least a part of the power generation zone (e.g., in a low-load operation mode only).

The fuel gas to be supplied to the anode is not limited to hydrogen. For example, a reformed gas derived from a reforming reaction of a hydrocarbon compound may be used as a source of hydrogen to be supplied to the anode. In this instance, methane-based natural gas, methanol or other similar alcohol, or gasoline may be used as the hydrocarbon compound. Further, a catalyst and temperature suitable for the reforming reaction are selected in accordance with the type of the employed hydrocarbon compound. A hydrogen-rich reformed gas containing hydrogen, carbon dioxide, and water is then generated.

The fuel cell 2 is structured so that a plurality of cells are stacked. Each cell is structured so that an electrolyte membrane is sandwiched between a pair of electrodes (anode and cathode).

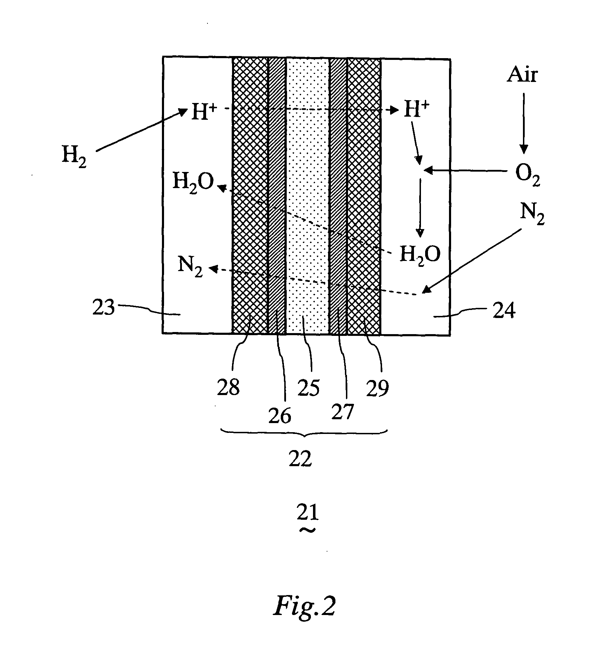

Fig. 2 is a schematic cross-sectional view illustrating a typical cell that is included in the fuel cell 2. As shown in Fig. 2, the cell 21 is formed by stacking a membrane electrode gas-diffusion-layer assembly (MEGA) 22 and separators 23, 24 in which reaction gas passages are formed. The MEGA 22 includes an electrolyte membrane 25, which is made of solid polymer. An anode 26, which is made of a catalytic layer, is placed on one surface of the electrolyte membrane 25. A cathode 27, which is made of a catalytic layer, is placed on the other surface of the electrolyte membrane 25. Gas diffusion layers 28, 29 are placed on the outer surfaces of the anode 26 and cathode 27. The separators 23, 24 are provided for the anode 26 and cathode 27 through the gas diffusion layers 28, 29.

It is assumed that the present embodiment uses carbon (C) for the cathode 27. More specifically, it is assumed that carbon is used for at least either of the catalytic layer and gas diffusion layer. For example, the cathode 27 may be composed of platinum (Pt), which serves as a catalytic metal, and carbon, which serves as a support for the catalytic metal. Using carbon for the catalytic layer improves catalyst characteristics. The gas diffusion layer 29 may also be composed of carbon. To improve the catalyst characteristics, it is preferred that carbon be used not only for the cathode 27 but also for the anode 26. However, the anode 26 according to the present invention may be composed of a material other than carbon.

When hydrogen is supplied to the anode 26, a reaction occurs in the anode 26 to generate H⁺ as indicated by Equation (1) below:

H₂ → 2H⁺ + 2e⁻ (1)

The generated H⁺ then moves through the electrolyte membrane 25 to the cathode 27 and reacts with oxygen supplied to the cathode 27 as indicated by Equation (2) below:

(1/2)O₂ + 2H⁺ + 2e⁻ → H₂O (2)

In other words, an electrochemical reaction occurs between the electrodes to generate electromotive force in the fuel cell 2 as indicated by Equation (3) below:

H₂ + (1/2)O₂ → H₂O (3)

As indicated by Equation (3), the electrochemical reaction occurs between the electrodes to generate water on the side toward the cathode 27. The generated water passes through the electrolyte membrane 25 and accumulates on the side toward the anode 26.

Air supplied to the cathode 27 contains nitrogen. The nitrogen also passes through the electrolyte membrane 25 and accumulates on the side toward the anode 26.

Therefore, when the fuel cell 2 operates, water and nitrogen gradually accumulate in the passage 8 for the fuel off gas. The partial pressure of the hydrogen then decreases to lower the voltage of the fuel cell 2.

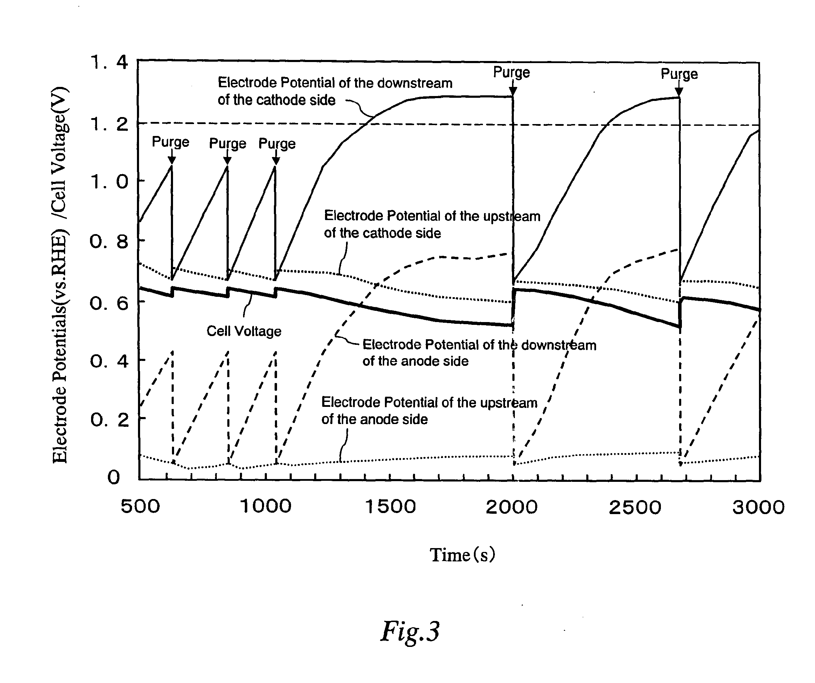

Fig. 3 shows how the electrode potentials of the anode and cathode and the cell voltage of the fuel cell change with time. As indicated in Fig. 3, the potentials developed downstream of the anode 26 and cathode 27 increase with time. Meanwhile, the cell voltage decreases with time. The reason is described below.

As described above, when the fuel cell 2 is operated according to the dead end method, impurities such as nitrogen and water accumulate with time in the passage 8 for the fuel off gas. The pressure of the hydrogen is adjusted to a predetermined value by the hydrogen pressure regulating valve 7. Therefore, when the concentration of impurities in the fuel off gas increases, the partial pressure of the hydrogen relatively decreases. Consequently, a region deficient in hydrogen (hereinafter referred to as local hydrogen deficiency) arises downstream of the anode 26. The potential of this region then increases as indicated in Fig. 3, thereby increasing the potential of a region of the cathode 27 that faces the former region. In addition, the cell voltage of the fuel cell 2 decreases.

For example, let us assume that local hydrogen deficiency occurs in a cell included in the fuel cell 2. This cell will be referred to as the cell deficient in hydrogen. The potential of the anode 26 increases because the potential permitting nitrogen and oxygen to exist as molecules is not 0 (zero) V but 0.6 to 0.7 V. Therefore, the potential area available for effective use decreases to lower the voltage. In addition, the cell voltage also decreases.

The decreased cell voltage can be recovered by opening the purge valve 9, which is installed in the passage 8 for the fuel off gas, to purge the fuel off gas. Fig. 3 indicates that the cell voltage is restored to a previous value when the purge valve is opened with arrow-indicated timing. The figure also indicates that the increased potentials of the anode 26 and cathode 27 are decreased.

In the present embodiment, the timing for performing the above purge can be determined as appropriate. For example, the purge can be performed periodically by opening the purge valve 9 at predetermined time intervals. The purge can also be performed by opening the purge valve 9 when a predetermined value is reached or exceeded by the difference between a measured voltage value and an initial voltage value for a particular condition defined by the current-voltage characteristic of the fuel cell 2.

In the cathode 27, electrolysis of water occurs. If the catalytic layer of the cathode 27 uses carbon (C), oxidation reaction of carbon occurs as indicated by Equation (4) below when the potential of the cathode 27 increases:

C + 2H₂O → CO₂ + 4H⁺ + 4e⁻ (4)

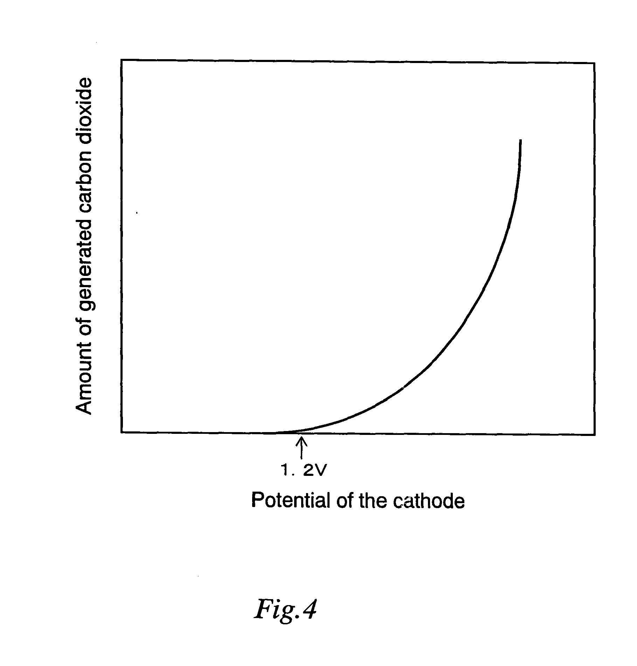

Fig. 4 shows the relationship between the potential of the cathode 27 and the amount of carbon oxidation. The vertical axis represents the amount of generated carbon dioxide (CO₂). As is obvious from Equation (4), the amount of carbon oxidation increases with an increase in the amount of generated CO₂.

As indicated by Equation (4), carbon oxidizes when it reacts with water. Meanwhile, if local hydrogen deficiency occurs in the anode 26, the potentials of the anode 26 and cathode 27 increase. In addition, electrolysis of water occurs in the cathode 27 to compensate for hydrogen deficiency. This reaction correlates with the potential of the cathode 27. Therefore, electrolysis of water progresses as the potential of the cathode 27 increases. More specifically, when the potential of the cathode 27 increases, electrolysis of water progresses to decrease the amount of water that reacts with carbon. Thus, the potential at which carbon oxidation begins rises when electrolysis of water is accelerated. Measurements made by the inventor of the present invention indicate that carbon oxidation begins at a cathode potential of 1.2 V or higher as indicated in Fig. 4 when electrolysis of water occurs.

Meanwhile, when the purge valve 9 is opened to purge the impurities accumulated in the anode 26, hydrogen is discharged in addition to the impurities. Therefore, if the purge is performed when the potential of the cathode 27 is approximately 1.2 V or higher, carbon oxidation drastically progresses. To avoid such drastic carbon oxidation, the purge should not be performed when the potential of the cathode is approximately 1.2 V or higher. Thus, means for performing a purge is deactivated when the potential of the cathode 27 is approximately 1.2 V or higher.

A standard hydrogen electrode (SHE) needs to be provided to measure the potential of the cathode 27. In this instance, the cell voltage is to be measured instead of measuring the potential of the cathode 27. More specifically, the cell voltage is equal to the difference between the cathode potential and anode potential. Therefore, a cathode potential X at which carbon oxidation occurs and the maximum value Y of the anode potential, which increases in the event of local hydrogen deficiency, are predetermined. The means for performing a purge is deactivated when the measured cell voltage value is not smaller than the value X - Y.

The measurements made by the inventor of the present invention indicate that carbon oxidation occurs in the cathode 27 when X = 1.2 V or more. Further, when local hydrogen deficiency occurs, the potential of the anode 26 increases up to Y = 0.5 V or so. In the present invention, therefore, it is preferred that X = 1.1 V to 1.3 V, and it is more preferred that X = 1.2 V. In addition, it is preferred that Y = 0.45 V to 0.55 V, and it is more preferred that Y = 0.50 V. However, the value Y varies, for instance, with the fuel gas type, fuel cell system operating conditions, and catalytic layer specifications. Therefore, it is ideal that the value Y be optimized as appropriate.

The fuel cell system 1 shown in Fig. 1 uses voltage measurement means 11 to measure the cell voltage. The voltage measurement means 11 may monitor the voltages of all cells constituting the fuel cell 2 or individually monitor the voltage of each cell. In addition, purge means 16 includes the purge valve 9, the passage 8, and a control device 12. The control device 12 controls the open/close operation of the purge valve 9. The fuel cell system 1 also includes purge limitation means 13, which inhibits the purge means 16 from operating. The purge limitation means 13 according to the present invention limits the operation of the purge means 16. When the operation of the purge means 16 is limited, the opening of the purge valve 9 is limited. When the operation of the purge means 16 is inhibited, the purge valve 9 is fully closed. Therefore, when the purge limitation means 13 operates, the purge valve 9 is limited to a very small opening or fully closed. It is preferred that the purge limitation means 13 inhibit the operation of the purge means 16 and fully close the purge valve 9 as described in conjunction with the present embodiment.

When, for instance, X = 1.2 V and Y = 0.5 V, it is necessary to ensure that no purge is performed when the cell voltage is not lower than 0.7 V. Therefore, data measured by the voltage measurement means 11 is forwarded to the purge limitation means 13, and the purge limitation means 13 is operated when the measured data represents a voltage not lower than 0.7 V. More specifically, the purge limitation means 13 sends a signal to the control device 12 to inhibit the operation of the purge means 16. Since this ensures that no purge is performed when the potential of the cathode 27 is not lower than 1.2 V, the oxidation reaction of carbon in the cathode 27 can be inhibited.

Further, the purge limitation means 13 may control the control amount of the purge means 16 in accordance with the progress of carbon oxidation on the side toward the cathode 27. More specifically, it is necessary to ensure that the degree of purge decreases as carbon oxidation on the side toward the cathode 27 progresses. Therefore, for example, the amount of carbon dioxide (CO₂) generated from the side toward the cathode 27 is measured. Further, the purge limitation means 13 is controlled so that the amount of purge provided by the purge means 16 decreases with an increase in the amount of CO₂ generation. This ensures that the amount of purge decreases as carbon oxidation progresses. Consequently, the oxidation reaction of carbon in the cathode 27 can be inhibited.

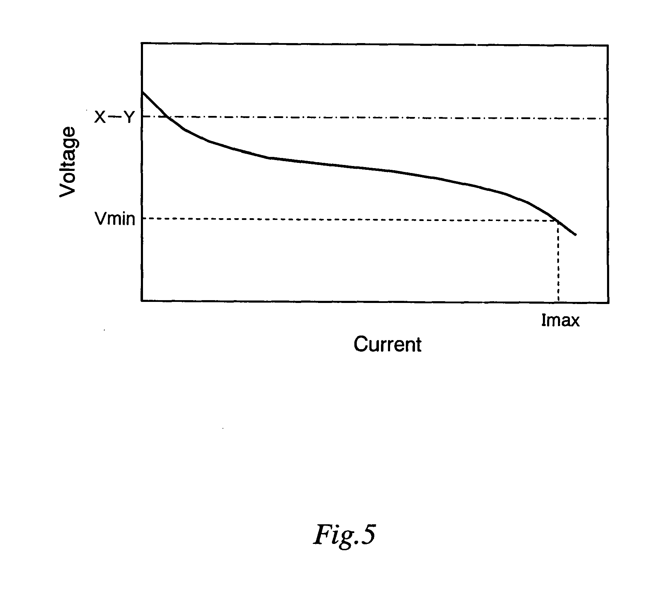

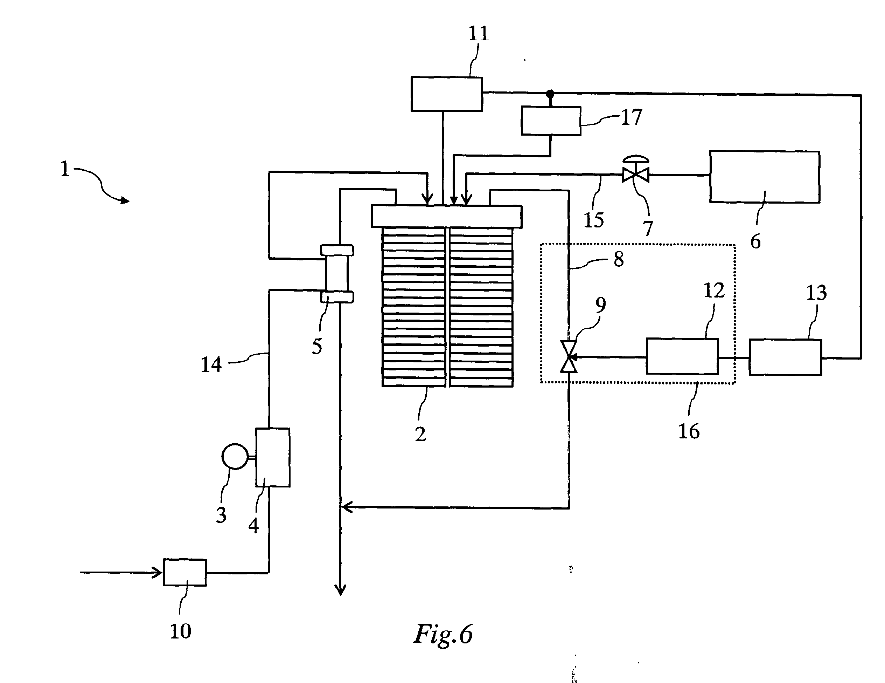

The fuel cell system 1 according to the present embodiment may also include voltage decrease means 17, which decreases the cell voltage of the fuel cell 2. Fig. 6 shows a typical configuration of the fuel cell system that includes the voltage decrease means 17. Like elements in Figs. 1 and 6 are designated by the same reference numerals and will not be redundantly described. The voltage decrease means 17 may be used, for instance, so that the current in the fuel cell 2 is set to the maximum value of the permissible current in the fuel cell 2. This function will now be described in detail with reference to Figs. 5 and 6.

Fig. 5 shows the relationship between current I and voltage V of the fuel cell 2. As shown in Fig. 5, the voltage V decreases with an increase in the current I. The maximum value Imax of the permissible current in the fuel cell 2 corresponds to the minimum value Vmin of output voltage. Therefore, when the current I is set to the maximum value Imax, the voltage V gradually decreases to the minimum value Vmin. Thus, the voltage decrease means 17 is used to select the maximum permissible current for the fuel cell 2. The voltage decrease means 17 operates when the cell voltage value is not smaller than the value X - Y. This ensures that the cell voltage value is definitely smaller than the value X - Y. The purge limitation means 13 is deactivated when the cell voltage value is smaller than the value X - Y.

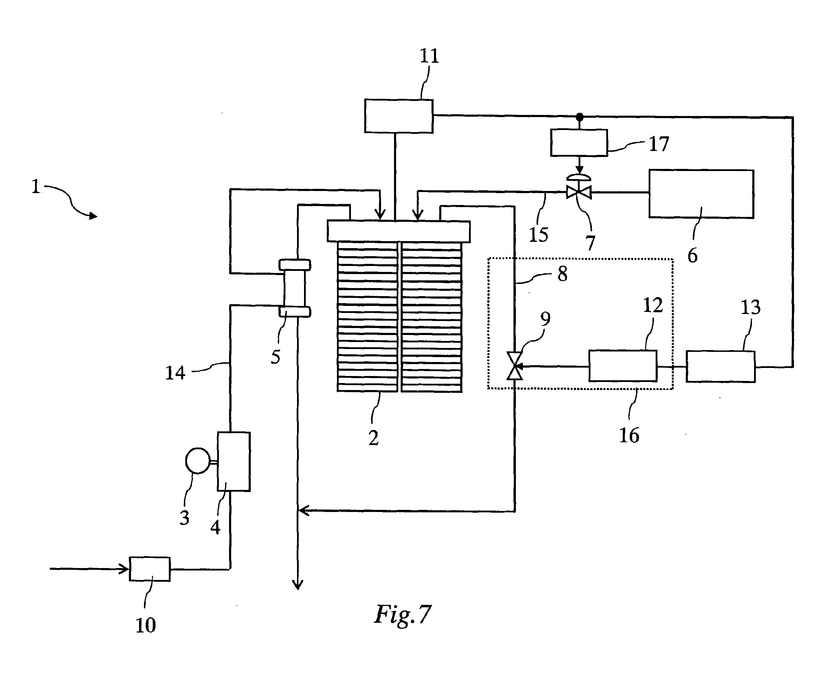

Fig. 7 shows a typical configuration of the fuel cell system that includes a different voltage decrease means 17. Like elements in Figs. 1 and 7 are designated by the same reference numerals and will not be redundantly described. As shown in Fig. 7, this voltage decrease means 17 can be used so that the pressure of hydrogen to be supplied to the anode 26 is set to the minimum pressure required for a purge.

The cell voltage can be decreased by decreasing the pressure for hydrogen supply to the anode 26. For a purge, however, the pressure for hydrogen supply to the anode 26 needs to be sufficient for discharging nitrogen, water, and other impurities. In other words, the purge cannot be performed if the pressure for hydrogen supply is insufficient for impurity discharge.

Thus, the voltage decrease means 17 is used so that the pressure for hydrogen supply to the anode 26 is set to the minimum pressure required for a purge. The voltage decrease means 17 operates when the cell voltage value is not smaller than the value X - Y. The cell voltage can then be set to a value smaller than the value X - Y without affecting a purge. In this instance, too, the purge limitation means 13 is deactivated when the cell voltage value is smaller than the value X - Y.

As described above, when the cell voltage value is not lower than a predetermined value, the fuel cell system 1 according to the present embodiment activates the purge limitation means 13 to refrain from performing a purge. This makes it possible to discharge impurities accumulated on the side toward the anode 26 while inhibiting the oxidation of carbon in the cathode 27.

The present invention is not limited to the above described embodiment. It is to be understood that various variations may be made without departure from the scope and spirit of the present invention.

## Claims

1. A fuel cell system that has a fuel cell containing an anode and a cathode, which are positioned on either side of an electrolyte membrane, supplies a fuel gas to the anode, supplies an oxidant gas to the cathode, and operates while a passage for a fuel off gas discharged from the fuel cell is closed, carbon being used for a side toward the cathode, the fuel cell system comprising:
voltage measurement means for measuring a voltage of the fuel cell;
purge means for performing a purge by opening the passage for the fuel off gas; and
purge limitation means for limiting an operation of the purge means when the voltage measured by the voltage measurement means is not lower than a predetermined value.

2. The fuel cell system according to claim 1, wherein, when a potential of the cathode at which the carbon oxidizes is X and a maximum value of a potential of the anode is Y, the predetermined value is equal to X - Y.

3. The fuel cell system according to claim 2, wherein the value X is between 1.1 V and 1.3 V; and wherein the value Y is between 0.45 V and 0.55 V.

4. The fuel cell system according to claim 2 or 3, wherein the value X is 1.2 V.

5. The fuel cell system according to any one of claims 1 to 4, wherein the predetermined value is 0.7 V.

6. The fuel cell system according to any one of claims 1 to 5, further comprising:
voltage decrease means for decreasing the voltage of the fuel cell when the voltage measured by the voltage measurement means is not lower than the predetermined value.

7. The fuel cell system according to claim 6, wherein the voltage decrease means sets a current in the fuel cell to a maximum value of a permissible current in the fuel cell.

8. The fuel cell system according to claim 6, wherein the voltage decrease means sets a pressure of the fuel gas to a minimum pressure required for the purge.

9. A fuel cell system that has a fuel cell containing an anode and a cathode, which are positioned on either side of an electrolyte membrane, supplies a fuel gas to the anode, supplies an oxidant gas to the cathode, and in at least a particular operation mode, operates while a passage for a fuel off gas discharged from the fuel cell is closed, carbon being used for a side toward the cathode, the fuel cell system comprising:
purge means for performing a purge by opening the passage for the fuel off gas; and
purge limitation means for limiting an operation of the purge means so that an amount of purge decreases as oxidation of the carbon progresses.

10. The fuel cell system according to claim 9, wherein the purge limitation means limits an operation of the purge means so that the amount of purge decreases with an increase in an amount of carbon dioxide generation in the cathode.
